(19) Europäisches Patentamt
European Patent Office
Office européen des brevets

(11) **EP 3 488 197 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **17732896.0**

(22) Anmeldetag: **26.06.2017**

(51) Internationale Patentklassifikation (IPC):
**G01F 23/284** *(2006.01)*      **G01D 3/08** *(2006.01)*
**H02H 9/00** *(2006.01)*

(52) Gemeinsame Patentklassifikation (CPC):
**G01F 23/284; G01D 3/08; H02H 9/008**

(86) Internationale Anmeldenummer:
**PCT/EP2017/065655**

(87) Internationale Veröffentlichungsnummer:
**WO 2018/015107 (25.01.2018 Gazette 2018/04)**

(54) **VERFAHREN UND SICHERHEITSSCHALTUNG ZUR SICHEREN BEGRENZUNG DER ELEKTRISCHEN LEISTUNGSAUFNAHME EINES FELDGERÄTES**

PROCESS AND SAFETY CIRCUIT FOR ELECTRICAL POWER LIMITATION OF A FIELD DEVICE

PROCÉDÉ ET CIRCUIT DE SÉCURITÉ POUR LA LIMITATION DE LA PUISSANCE ÉLECTRIQUE D'UN APPAREIL DE TERRAIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2016   DE 102016113268**

(43) Veröffentlichungstag der Anmeldung:
**29.05.2019   Patentblatt 2019/22**

(73) Patentinhaber: **Endress+Hauser SE+Co. KG**
**79689 Maulburg (DE)**

(72) Erfinder:
• **GROZINGER, Roland**
**79395 Neuenburg (DE)**
• **STEINEBRUNNER, Edwin**
**79674 Todtnau (DE)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-A2- 2 154 381          EP-A2- 2 418 748**
**EP-B1- 2 154 381          WO-A1-2013/110296**
**DE-A1-102006 056 175     DE-A1-102010 040 833**
**DE-A1-102013 104 139     DE-A1-102014 110 385**
**DE-B4-102014 110 385**

**Beschreibung**

Die Erfindung betrifft ein Verfahren und eine Sicherheitsschaltung zur sicheren Begrenzung der elektrischen Leistungsaufnahme an einer elektrischen Baugruppe eines Feldgerätes.

In der Automatisierungstechnik, insbesondere in der Prozessautomatisie-rungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck und Temperaturmessgeräten, pH-Redoxpotential-Messgeräten, Leitfähigkeitsmessgeräten, usw. integriert sind. Sie erfassen die entsprechenden Prozessvariablen, wie Füllstand, Durchfluss, Druck, Temperatur, pH-Wert, Redoxpotential oder Leitfähigkeit. Zur Beeinflussung von Prozessvariablen dienen Aktoren, wie unter Anderem Ventile oder Pumpen, über die der Durchfluss einer Flüssigkeit in einem Rohrleitungsabschnitt bzw. der Füllstand in einem Behälter geändert werden kann. Im Rahmen der Erfindung werden unter dem Begriff "Behälter" auch nicht-abgeschlossene Behältnisse, wie beispielsweise Becken, Seen oder fließende Gewässer verstanden. Allgemein werden all diejenigen Geräte als Feldgeräte bezeichnet, die prozessnah eingesetzt werden und die prozessrelevante Informationen liefern oder verarbeiten. Daher werden im Zusammenhang mit der Erfindung unter Feldgeräten zusätzlich auch Remote I/Os, Funkadapter bzw. allgemein elektronische Komponenten verstanden, die auf der Feldebene angeordnet sind. Eine Vielzahl dieser Feldgeräte wird von der Firma Endress + Hauser hergestellt und vertrieben.

Da Feldgeräte oftmals in explosionsgefährdeten Bereichen, wie in Öltanks oder unter vergleichbaren Bedingungen eingesetzt werden, müssen sie entsprechend explosionssicher ausgelegt sein. Die in diesem Zusammenhang geltenden Vorgaben werden für den europäischen Raum in der Normenreihe IEC/EN 60079 festgelegt. Hiernach müssen die elektrischen Baugruppen von Feldgeräten so ausgelegt sein, dass sie die Atmosphäre des explosionsgefährdeten Bereichs nicht entzünden können.

Vergusskapselung stellt hierbei ein sehr geeignetes technisches Mittel zur explosionssicheren Ausgestaltung solcher elektrischer Baugruppen dar. Die hierfür notwendige Auslegung der Vergusskapselung wird in der Norm EN 60079, Teil 18 festgelegt. Die Anordnung der Baugruppe in einem druckfesten Gehäuse bildet eine weitere Maßnahme zum Explosionsschutz. Die Vorgaben, die das druckfeste Gehäuse in diesem Fall erfüllen muss, sind in Teil 1 der Norm IEC/EN 60079 definiert.

Bestimmte Baugruppen von Feldgeräten können jedoch nicht per Verguss und auch nicht durch ein druckfestes Gehäuse gesichert werden. Insbesondere die Sensormodule von Feldgeräten, beispielsweise die Drucksensoren bei Druckmessgeräten oder die Antennen-Einheit von Radar-basierten Füllstandsmessgeräten benötigen direkten Kontakt zu dem explosionsgefährdeten Bereich. Daher müssen diese elektrischen Baugruppen eigensicher ("Ex-i") ausgelegt sein. Dies bedeutet, dass die ihnen maximal zugeführte elektrische Leistung $P_{e,max}$ (bzw. der maximal zugeführte Dauerstrom $I_{max}$) sowie die maximal in ihnen gespeicherte elektrische Energie $W_{max}$ begrenzt sein muss. Die Begrenzung muss dabei so gewählt sein, dass es auch bei der maximalen Dauerleistung $P_{e,max}$ bzw. bei Entladung der maximal gespeicherten Energie $W_{max}$ zu keiner unzulässigen Erwärmung innerhalb der elektrischen Komponente über eine kritische Temperatur $T_{krit}$ kommt. Die kritische Temperatur $T_{krit}$ ist hierbei diejenige Temperatur, oberhalb derer die Atmosphäre des explosionsgefährdeten Bereichs durch die elektrische Baugruppe gezündet werden kann. Eigensichere Ausgestaltung von elektronischen Baugruppen wird in Teil 11 der Norm IEC/EN 60079 festgelegt. Die kritische Temperatur $T_{krit}$ richtet sich dabei nach dem jeweils vorhandenen Gasgemisch und ist in Teil 1 der Norm IEC/EN 60079 in verschiedene Klassen eingeteilt

Die Veröffentlichungsschrift DE 10 2013 104 139 A1 offenbart ein Feldgerät mit einer Sicherheitsschaltung, welche die Eingangs-Leistung auf einen definierten Maximalwert begrenzt. In der Veröffentlichungsschrift WO 2012/034796 A2 wird eine Sicherheitsschaltung für eine eigensichere elektrische Baugruppe eines Feldgerätes beschrieben. Die dort gezeigte Sicherheitsschaltung regelt den elektrischen Eingangs-Pfad, über den die zu sichernde Baugruppe mit Leistung versorgt wird, derart, dass eine Erwärmung der zu sichernden Baugruppe auf oberhalb der kritischen Temperatur Tkrit vermieden wird. Die Regelung basiert auf einem getakteten Kurzschließen des Eingangs-Pfades auf Masse. Dabei wird die maximal übertragbare Leistung durch das Taktungsverhältnis eingestellt. Dieses Taktungsverhältnis und die Taktfrequenz, mit der die Sicherheitsschaltung den elektrischen Eingangs-Pfad taktet, wird durch eine übergeordnete Einheit eingeprägt. Die Sicherheitsschaltung stellt somit sicher, dass im Falle eines Defektes an der zu sichernden Baugruppe dieser unter keinen Umständen mehr als die maximal erlaubte mittlere Leistung $P_{e,max}$ zugeführt wird. Allerdings ist es bei der Sicherheitsschaltung, die in der Veröffentlichungsschrift WO 2012/034796 A2 beschrieben wird, nicht ausgeschlossen, dass im Falle einer falschen Taktung, beispielsweise bei Versagen der übergeordneten Einheit, die maximal erlaubte Leistung Pe,max im Mittel zwar nicht überschritten wird, aber ein andauernden Leistungsumsatz in der Sicherheitsschaltung stattfindet. Um dies zu vermeiden ist eine synchrone und zeitlich aufeinander abgestimmte Taktung erforderlich.

Ferner beschreibt die Veröffentlichungsschrift DE 10 2010 040833 A1 ein Verfahren zur sicheren Begrenzung der Aufnahme elektrischer Leistung an einer elektrischen Baugruppe eines Feldgerätes und eine entsprechende Sicherheitsschaltung gemäß dem Stand der Technik.

Der Erfindung liegt daher die Aufgabe zugrunde, ein Verfahren und eine Sicherheitsschaltung zur sicheren Begrenzung der Leistungsaufnahme an einer elektrischen Baugruppe eines Feldgerätes bereitzustellen, wobei die Begrenzung auch bei Versagen von übergeordneten Einheiten sicherzustellen ist.

Die Erfindung löst diese Aufgabe durch ein Verfahren gemäß dem unabhängigen Patentanspruch 1.

Durch das erfindungsgemäße Verfahren wird erreicht, dass die Leistungsaufnahme an der elektrischen Baugruppe auch bei Versagen der übergeordneten Einheiten zumindest begrenzt oder komplett unterbrochen wird. Hierdurch wird verhindert, dass sich die elektrische Baugruppe auf über eine kritischen Temperatur $T_{krit}$ erhitzt, oberhalb derer die Baugruppe die Atmosphäre in einem explosionsgefährdeten Bereich entzünden könnte.

Je nach Auslegung der Sicherheitsschaltung ist es vorteilhaft, das Steuer-Signal ($s_c$) beispielsweise als Sinus-Signal, Sägezahn-Signal oder insbesondere als Rechtecksignal zu realisieren. Dabei kann es sich jeweils um eine periodische Signalform handeln, es kann aber auch als azyklisches Signal erzeugt werden.

Das erfindungsgemäße Verfahren ist in eine Sicherheitsschaltung implementiert, wobei die elektrische Leistung ($P_e$) bei einem fehlerhaften Steuer-Signal ($s_c$) durch die Sicherheitsschaltung begrenzt wird, indem der Eingangs-Pfad mindestens in einer vordefinierten Minimal-Ausschaltdauer ($t_{off,min}$) durch die Sicherheitsschaltung von der übergeordneten Einheit getrennt wird. In diesem Fall kann es vorteilhaft sein, das Steuer-Signal ($s_c$) als fehlerhaft einzustufen, wenn es eine vordefinierte Maximal-Taktfrequenz ($f_{t,max}$) und/oder eine vordefinierte Maximal-Einschaltdauer ($t_{on,max}$) überschreitet. Diese Einstufung ist vorzugsweise bei periodischenund speziell bei Rechteck-Signalen anzuwenden. Vor allem in diesem Fall ist es von Vorteil, die Minimal- Ausschaltdauer ($t_{off,min}$) derart zu bemessen, dass die Temperatur der Baugruppe unterhalb einer kritischen Temperatur ($T_{krit}$) verbleibt, oberhalb derer die Atmosphäre eines explosionsgefärdeten Bereichs gezündet werden könnte.

Bei dem erfindungsgemäßen Verfahren bietet es sich außerdem an, das Feldgerät so zu konzipieren, dass das Steuer-Signal ($s_c$) von derselben übergeordneten Einheit erzeugt wird, über die auch die Leistungsversorgung der zu sichernden elektrischen Baugruppe erfolgt. In diesem Fall hat das Feldgerät für diese beiden Aufgaben lediglich ein und die gleiche Baugruppe zu umfassen.

Des Weiteren betrifft die Erfindung eine Sicherheitsschaltung gemäß dem unabhängigen Patentanspruch 6.

Hierfür ist eine übergeordnete Einheit zur Erzeugung des Steuer-Signals ($s_c$) vorgesehen. Dadurch ist die Sicherheitsschaltung in der Lage, das erfindungsgemäße Verfahren zur Leistungsbegrenzung an einer zu sichernden Baugruppe in einem Feldgerät umzusetzen.

Vorzugsweise sind/ist der zumindest eine Schalter und/oder der Signaleingang als Transistoren/Transistor realisiert. Ebenso denkbar wäre aber auch eine Umsetzung mittels eines oder mehrerer Relais.

In einer sehr robusten Ausführungsvariante der Sicherheitsschaltung umfasst der Schaltkreis:

- einen als Komparator geschalteten Verstärker mit

  o zumindest einem ersten Eingang für das Steuer-Signal ($s_c$), und
  o einem Ausgang, über den der Schalter gesteuert wird, sowie

- zumindest einen Kondensator.

Hierbei ist der zumindest eine Kondensator derart zu dimensionieren und zwischen dem Signaleingang sowie dem ersten Eingang zu verschalten, dass die Minimal-Ausschaltdauer ($t_{off,min}$) zumindest von der Kapazität des zumindest einen Kondensators abhängig ist.

Die Erfindung wird anhand der nachfolgenden Figuren erläutert. Es zeigt:

Fig. 1: Anordnung einer erfindungsgemäßen Sicherheitsschaltung in einem Feldgerät,

Fig. 2: ein Schaltplan einer Ausführungsvariante der Sicherheitsschaltung,

Fig. 3: Getaktete Leistungsbegrenzung der Sicherheitsschaltung bei einem Rechteckförmigen Steuersignal,

Fig. 4: Getaktete Leistungsbegrenzung bei einem fehlerhaften Rechteck-Signal mit zu hoher Einschaltdauer pro Takt,

Fig. 5: Getaktete Leistungsbegrenzung bei einem fehlerhaften Rechteck-Signal mit zu hoher Taktfrequenz, und

Fig. 6: die Temperaturentwicklung an der zu sichernden elektrischen Baugruppe bei Begrenzung der Leistungsaufnahme durch die Sicherheitsschaltung.

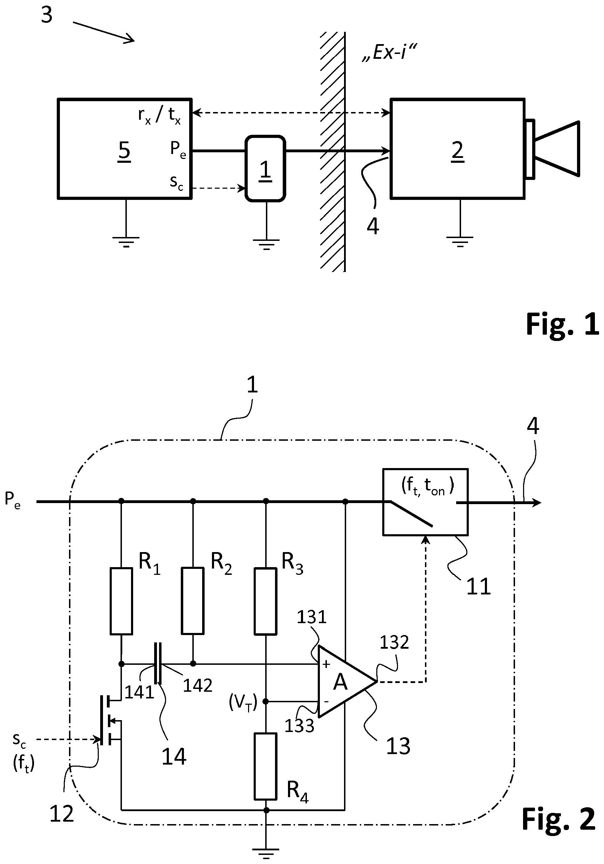

Anhand von Fig. 1 wird die Notwenigkeit einer Sicherheitsschaltung 1 in einem Feldgerät 3 und die ungefähre Funktionsweise der erfindungsgemäßen Sicherheitsschaltung 1 illustriert:
Häufig wird das Feldgerät 3 in explosionsgefährden Bereichen eingesetzt. Aus diesem Grund sind dessen elektronische Komponenten 2, 5 entsprechend der Normenreihe IEC/EN 60079 oder einer adäquaten Norm explosionssicher ausgelegt, da sie ohne diese Sicherungsmaßnahmen potentiell als Zündquelle wirken könnten.

Das in Fig. 1 dargestellte Feldgerät 3 umfasst zwei elektrische Komponenten 2, 5: Zum einen umfasst es eine übergeordnete Einheit 5, die beispielsweise zur Messwertverarbeitung oder auch zur Kommunikation mit einem Prozessleitsystem dienen kann. Die übergeordnete Einheit 5 muss nicht in direktem Kontakt mit dem explosionsgefährdeten Bereich stehen und kann daher per Vergusskapselung (beispielsweise gemäß IEC/EN 60079-18) und/oder durch ein druckfestes Gehäuse (entsprechend IEC/EN 60079-1) geschützt werden.

Anders verhält es sich bei einer zweiten elektrischen Baugruppe 2, die beispielsweise Drucksensoren zur Druckmessung oder eine Antennen-Einheit zur Radar-basierten Füllstandsmessung umfasst und daher in direktem Kontakt mit dem explosionsgefährdeten Bereich stehen muss. Da hier weder Vergusskapselung, noch druckfeste Kapselung möglich ist, ist die elektrische Baugruppe 2 eigensicher ("Ex-i") ausgelegt. Dabei kann die zur Verfügung gestellte eigensichere Leistung $P_e$ für den Fall, dass es sich bei der Baugruppe 2 um ein sehr kleines Bauteil handelt, eine derart starke Erwärmung erzeugen, so dass die kritische Temperatur $T_{krit}$ überschritten wird. Durch Begrenzung der ihr zugeführten Leistung $P_e$ durch Taktung wird sichergestellt, dass die Temperatur der Baugruppe unterhalb einer kritischen Temperatur $T_{krit}$ bleibt, oberhalb derer es zu einer Zündung der Atmosphäre im explosionsgefährdeten Bereich kommen könnte.

Die elektrische Baugruppe 2 wird bei dem in Fig. 1 gezeigten Feldgerät 3 durch die übergeordnete Einheit 5 mit elektrischer Leistung $P_e$ versorgt, wobei die LeistungsAufnahme an der elektrischen Baugruppe 2 über einen Eingangs-Pfad 4 erfolgt. Hierbei ist die Sicherheitsschaltung 1 im Eingangs-Pfad 4 zwischen der übergeordneten Einheit 5 und dem Eingangs-Pfad 4 angeordnet. Erfindungsgemäß wird die Aufnahme der elektrischen Leistung $P_e$ gesteuert, indem der elektrische Eingangs-Pfad 4 in einer vordefinierten Taktung durch die Sicherheitsschaltung 1 von der übergeordneten Einheit 5 getrennt wird, wobei die Taktung durch ein Steuer-Signal $s_c$ an der Sicherheitsschaltung 1 gesteuert wird.

Der zentrale Aspekt des erfindungsgemäßen Verfahrens besteht darin, dass im Fall einer defekten übergeordneten Einheit 5 die Leistung $P_e$ zumindest begrenzt oder unterbrochen wird. Erfindungsgemäß wird der elektrische Eingangs-Pfad 4 daher bei fehlendem SteuerSignal $s_c$ durch die Sicherheitsschaltung 1 unterbrochen. Bei einem fehlerhaften SteuerSignal $s_c$ wird die elektrische Leistung $P_e$ durch die Sicherheitsschaltung 1 begrenzt. Hierdurch wird sichergestellt, dass auch bei Versagen der übergeordneten Einheit 5 in keinem Fall mehr als eine vordefinierte Maximal-Leistung $P_{e,max}$ übertragen wird.

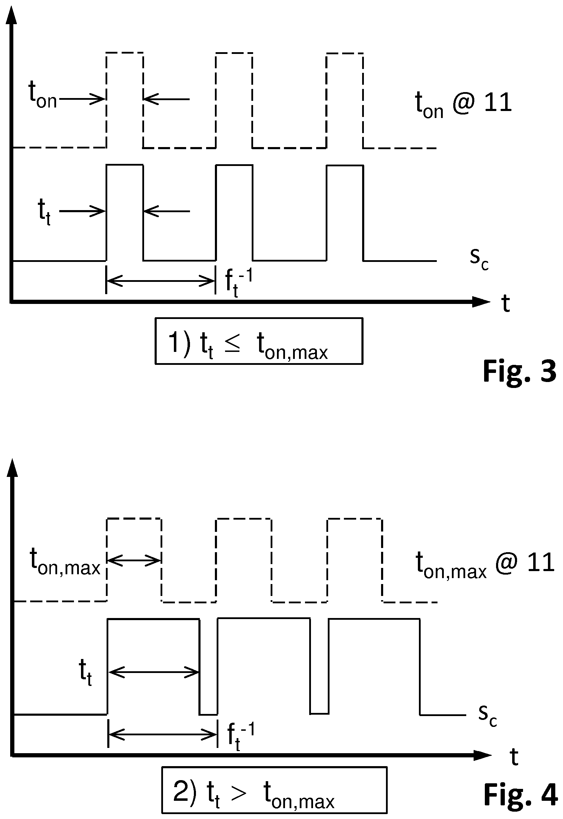

Eine mögliche schaltungstechnische Umsetzung des erfindungsgemäßen Verfahrens in einer entsprechenden Sicherheitsschaltung 1 ist in Fig. 2 gezeigt. Die dort gezeigte Sicherheitsschaltung 1 basiert auf einem Schalter 11, der im Eingangs-Pfad 4 angeordnet ist und diesen in einer vordefinierten Taktung unterbricht. Die Funktionsweise dieser Sicherheitsschaltung 1 lässt sich am anschaulichsten erläutern, wenn als Steuer-Signal $s_c$, wie in Fig. 3 bis Fig. 6 dargestellt, ein periodisches Rechteck-Signal mit vordefinierter Taktfrequenz $f_t$ und Taktlänge $t_t$ anliegt (die erfindungsgemäße Funktion der Sicherheitsschaltung 1 beschränkt sich jedoch nicht lediglich hierauf. Vielmehr ist auch eine gleichwertige Schutzfunktion gegeben, wenn es sich bei dem Steuer-Signal $s_c$ beispielsweise um ein entsprechendes periodisches Sägezahn- oder Sinus-Signal, oder ein azyklisch getaktetes Rechteck- oder sonstiges Signal handelt):
Der Schalter 11 ist in der gezeigten Ausführungsvariante als pnp-Transistor oder als p-Kanal-MOSFET realisiert und wird über einen Ausgang 132 eines Verstärkers 13 geöffnet bzw. geschlossen. Der Verstärker 13 ist hierbei als Komparator verschaltet. Der Verstärker 13 wiederum wird über einen ersten Eingang 131 indirekt durch das SteuerSignal $s_c$ gesteuert. Dadurch wird der Schalter 11 in der Taktung des periodischen Steuer-Signals $s_c$ gesteuert.

Das Potential am zweiten Verstärker-Eingang 133 wird über einen Spannungs-Teiler $R_3$, $R_4$ eingestellt. Hierdurch wird eine Grenzspannung $V_T$ festgelegt, die am ersten Eingang 131 unterschritten werden muss, damit der Ausgang 132 des Verstärkers 13 tief genug liegt und somit der Schalter 11 schließt. Damit der Schalter 11 schließt, wenn niedriges Potential am ersten Eingang 131 und somit niedriges Potential am Ausgang 132 des Verstärkers 13 anliegt, ist dieser als bipolarer pnp-Transistor oder als p-Kanal MOSFET auszulegen (bei Verwendung von npn-Transistoren statt pnp-Transistoren bzw. n-Kanal MOSFET statt p-Kanal MOSFET ergeben sich zur Schaltungsrealisierung entsprechend andere Pegelverhältnisse).

Wie aus Fig. 2 hervorgeht, liegt das Steuer-Signal $s_c$ nicht direkt am ersten Eingang 131 des Verstärkers 13 an. Vielmehr steuert das Steuer-Signal $s_c$ das Gate bzw. die Basis eines als Transistor ausgelegten Signaleingangs 12. Durch Schließen dieses Transistors 12 mittels des Steuer-Signals $s_c$ wird ein erster Anschluss 141 eines Kondensators 14 auf Masse gezogen, wodurch am zweiten Anschluss 142 bei völlig entladenem Kondensator 14 im ersten Moment ebenfalls Massepotential anliegt. Hierdurch sinkt das Potential am zweiten Anschluss 142 des Kondensators, der mit dem ersten Eingang 131 des Verstärkers 14 verschaltet ist, kurzzeitig unterhalb der Grenzspannung $V_T$. Sofern der Transistor 12 als npn-Transistor oder n-Kanal MOSFET realisiert ist, wird der Schalter 11 also entsprechend der zuvor beschriebenen Zusammenhänge durch jeden positiven Pegel des periodischen Steuer-Signals $s_c$ der Schalter 11 geschlossen (bei Verwendung von npn-Transistoren statt pnp-Transistoren bzw. n-Kanal MOSFET statt p-Kanal MOSFET ergeben sich zur Schaltungsrealisierung entsprechend andere Pegelverhältnisse).

Nach Schließen des Transistors 12 steigt das Potential mit einer Zeitverzögerung, die einer Maximal-Einschaltdauer $t_{on,max}$ entspricht, wieder über die Grenzspannung $V_T$ an. Grund dafür ist, dass der Kondensator 14 über einen Widerstand $R_2$, der zwischen der Versorgungsleitung $P_e$ und dem zweiten Eingang 142 des Kondensators 14 bzw. dem ersten Eingang 131 des Verstärkers 13 angeordnet ist, wieder entsprechend aufgeladen wird. Die Maximal-Einschaltdauer $t_{on,max}$ wird somit durch die Zeitkonstante $(R_2*C)$ des Kondensators 14 bzw. des Widerstandes $R_2$ festgelegt.

Wird der Transistor 12 vor Ablauf der Maximal-Einschaltdauer $t_{on,max}$ wieder geöffnet, so liegt wieder ein höheres Potential als $V_T$ am ersten Eingang 131 des Verstärkers 13 an. Für diesen Fall ist der zeitliche Zusammenhang zwischen einem periodischen Rechtecksignal (mit einer Taktfrequenz $f_t$ bzw. einer Taktlänge $t_t$) als Steuer-Signal $s_c$ und der Einschaltdauer $t_{on}$ am Schalter 11 in Fig. 3 dargestellt. Entsprechend der zuvor beschriebenen Zusammenhänge zeigt sich, dass bei einer geringen Taktfrequenz $f_t$ und einer geringen Taktlänge $t_t$ unterhalb der Maximal-Einschaltdauer $t_{on,max}$ die Einschaltdauer $t_{on}$ mit der Taktlänge $t_t$ übereinstimmt. In diesem Fall ergibt sich die Leistung $P_e$, die zur elektrischen Baugruppe übertragen wird, entsprechend

$$P_e = P_{on}(f_t * t_{on}).$$

$P_{on}$ ist hierbei die elektrische Leistung, die bei kurzgeschlossenem Schalter 11 momentan eingespeist wird. Etwaige Leistungsanteile, die gegebenenfalls über periphere Eingänge, beispielsweise Signaleingänge $r_x/t_x$, zur elektrischen Baugruppe 2 gelangen, bleiben bei dieser Berechnung unberücksichtigt.

Wie in Fig. 4 dargestellt, verhält es sich anders, wenn der Transistor 12 nicht vor Ablauf der Maximal-Einschaltdauer $t_{on,max}$ geöffnet wird, beziehungsweise wenn die Taktlänge $t_t$ des Steuer-Signals $s_c$ aufgrund einer fehlerhaften Steuerung durch die übergeordnete Einheit 5 länger als die Maximal-Einschaltdauer $t_{on,max}$ ist. In diesem Fall wird der Schalter 11 zwar in der Frequenz $f_t$, jedoch nur für die Maximal-Einschaltdauer $t_{on,max}$ geschlossen. Somit wird die übertragene Leistung $P_e$ entsprechend

$P_e = P_{on}(f_t * t_{on,max})$ begrenzt.

Durch Fig. 3 und Fig. 4 wird auch deutlich, dass der elektrische Eingangs-Pfad 4 bei fehlendem Steuer-Signal $s_c$ (oder fehlerhafterweise bei einem konstanten Gleichspannungsförmigen Steuer-Signal $s_c$) durch die Sicherheitsschaltung 1 unterbrochen wird, da das Steuer-Signal $s_c$ keinerlei getakteten positiven Pegel oder einen statischen Pegel aufweist und der Schalter 11 somit den Signal-Eingang 4 dauerhaft von der übergeordneten Einheit 5 trennt.

Ein weiterer Fehler seitens der übergeordneten Einheit 5 kann auftreten, wenn diese das Steuer-Signal $s_c$ fehlerhaft mit einer Taktfrequenz $f_t$ erzeugt, die höher als eine vordefinierte Maximal-Taktfrequenz $f_{t,max}$ ist. Bei dessen Überschreiten würde das elektrische Bauteil 2 unzulässiger Weise mehr als eine vorbekannte Maximal-Leistung $P_{e,max}$ aufnehmen. Dadurch wäre es nicht ausgeschlossen, dass sich das elektrische Bauteil 2 auf über kritische Temperatur $T_{krit}$ hinaus erhitzt und damit eine potentielle Zündquelle im explosionsgefährdeten Bereich darstellt.

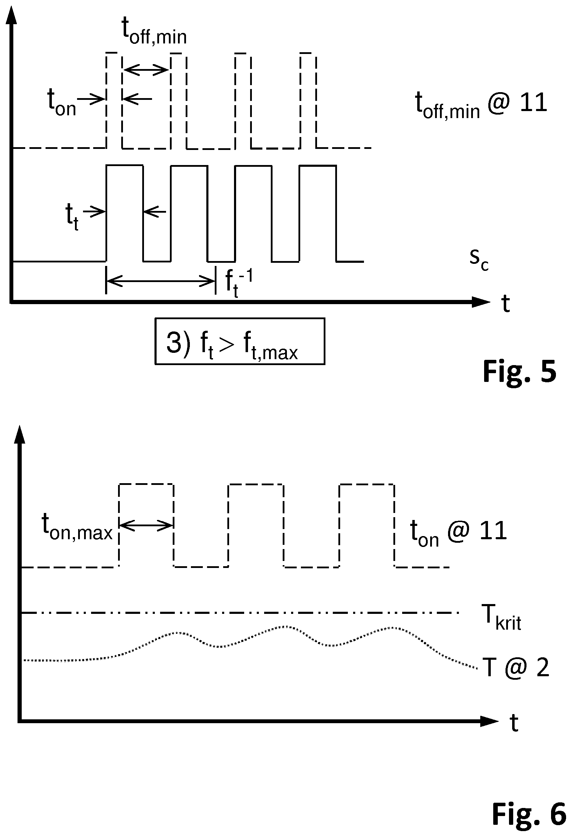

In Fig. 5 wird ersichtlich, dass die in Fig. 2 dargestellte Sicherheitsschaltung 1 auch bei solch einem fehlerhaften Steuer-Signal $s_c$ Leistung $P_e$ begrenzt. Die Begrenzung wirkt, indem der Schalter 11 der Sicherheitsschaltung 1 den Eingangs-Pfad 4 in diesem Fall mindestens mit in einer Minimal-Ausschaltdauer $t_{off,min}$ von der übergeordneten Einheit 5 trennt. Der Schalter 11 wird in diesem Fall zwar immer noch in der Taktfrequenz $f_t$ des Steuer-Signals $s_c$ getaktet. Mit steigender Taktfrequenz verringert sich jedoch die Einschaltdauer $t_{on}$ durch die gleichlang bleibende Minimal-Ausschaltdauer $t_{off,min}$ zunehmend (bis hin zu dem Extremfall $t_{on} = 0$), wodurch die übertragene Leistung wiederum begrenzt wird, auf:

$$P_e = P_{on}(1 - f_t * t_{off,min})$$

In Bezug auf die in Fig. 2 dargestellte Sicherheitsschaltung 1 resultiert die minimale Ausschaltdauer $t_{off,min}$ wiederum durch die Anordnung des Kondensators 14 innerhalb der Sicherheitsschaltung 1: In dem Fall, in dem die Taktfrequenz $f_t$ des Steuersignals $s_c$ höher als die Maximal-Taktfrequenz $f_{t,max}$ ist, wird der Kondensator 14 nicht mehr vollständig entladen. Hierdurch übersteigt das Potential am zweiten Anschluss 142 des Kondensators 14 bzw. am ersten Eingang 131 des Verstärkers 13 die Grenzspannung $V_T$ bereits verfrüht nach Durchschalten des Transistors 12. Die Maximal-Taktfrequenz $f_{t,max}$ ergibt sich in diesem Fall aus der Zeitkonstante $((R_1+R_2)*C)$ des Kondensators 14 in Verbindung mit den Widerständen $R_1$ und $R_2$.

In Fig. 6 ist schematisch dargestellt, wie sich die getaktete Begrenzung der Leistung $P_e$ auf die Temperatur der elektrischen Baugruppe 2 auswirkt: Durch die Taktung mit höchstens der Maximal-Einschaltdauer $t_{on,max}$ bzw. mit der Minimal-Ausschaltdauer $t_{off,min}$ (sofern die Maximal-Taktfrequenz $f_{t,max}$ überschritten wird) kühlt sich die elektrische Baugruppe 2 während der Dauer, in der die Sicherheitsschaltung 1 den Signal-Eingang 4 von der übergeordneten Einheit 5 trennt, jeweils ab. Hierdurch bleibt die Temperatur der elektrischen Baugruppe 2 immer unterhalb der kritischen Temperatur $T_{krit}$, oberhalb derer die Baugruppe 2 die Atmosphäre in einem explosionsgefährdeten Bereich entzünden könnte.

## Bezugszeichenliste

| 1 | Sicherheitsschaltung |
|---|---|
| 2 | Elektrische Baugruppe |
| 3 | Feldgerät |
| 4 | Eingangs-Pfad |

| 5 | Übergeordnete Einheit |
|---|---|
| 11 | Schalter |
| 12 | Signaleingang |
| 13 | Verstärker |
| 131 | Erster Eingang |
| 132 | Ausgang |
| 133 | Zweiter Eingang |
| 14 | Kondensator |
| 141 | Erster Kondensatoranschluss |
| 142 | Zweiter Kondensatoranschluss |
| $f_t$ | Taktfrequenz |
| $f_{t,max}$ | Maximal-Taktfrequenz |
| $P_e$ | Elektrische Leistung |
| $P_{e,max}$ | Maximal-Leistung |
| $R_{1-4}$ | Widerstände |
| $s_c$ | Steuer-Signal |
| $T_{krit}$ | Kritische Temperatur |
| $t_t$ | Taktlänge |
| $t_{on}$ | Einschaltdauer |
| $t_{on,max}$ | Maximal-Einschaltdauer |
| $t_{off,min}$ | Minimal-Ausschaltdauer |
| $V_T$ | Grenzspannung |

**Patentansprüche**

1. Verfahren zur sicheren Begrenzung der Aufnahme elektrischer Leistung ($P_e$) an einer elektrischen Baugruppe (2) eines Feldgerätes (3), wobei die Baugruppe (2) die elektrische Leistung ($P_e$) über einen elektrischen Eingangs-Pfad (4) von einer übergeordneten Einheit (5) aufnimmt, wobei

   - die Aufnahme der elektrischen Leistung ($P_e$) gesteuert wird, indem der Eingangs-Pfad (4) durch eine Sicherheitsschaltung (1) in einer vorbestimmten Taktung von der übergeordneten Einheit (5) getrennt wird, wobei die Taktung durch ein SteuerSignal ($s_c$) an der Sicherheitsschaltung (1) gesteuert wird,

   **dadurch gekennzeichnet, dass**

   - der elektrische Eingangs-Pfad (4) sowohl bei fehlendem Steuer-Signal ($s_c$) als auch bei einem konstanten gleichspannungsförmigen Steuer-Signal ($s_c$) durch die Sicherheitsschaltung (1) dauerhaft von der übergeordneten Einheit (5) getrennt wird, und
   - bei einem fehlerhaften Steuer-Signal ($s_c$) die elektrische Leistung ($P_e$) durch die Sicherheitsschaltung (1) begrenzt wird, indem der Eingangs-Pfad (4) mindestens in einer vordefinierten Minimal-Ausschaltdauer ($t_{off,min}$) durch die Sicherheitsschaltung (1) von der übergeordneten Einheit (5) getrennt wird, wobei das Steuer-Signal ($s_c$) fehlerhaft ist, wenn es eine vordefinierte Maximal-Taktfrequenz ($f_{t,max}$) und/oder eine vordefinierte Maximal-Einschaltdauer ($t_{on,max}$) überschreitet.

2. Verfahren nach Anspruch 1,
   **dadurch gekennzeichnet, dass**
   es sich bei dem Steuer-Signal ($s_c$) um ein Rechteck-Signal handelt.

3. Verfahren nach Anspruch 1 oder 2,
   **dadurch gekennzeichnet, dass**
   es sich bei dem Steuer-Signal ($s_c$) um ein periodisches Signal handelt.

4. Verfahren nach Anspruch 1 bis 3,
   **dadurch gekennzeichnet, dass**
   die Minimal- Ausschaltdauer ($t_{off,min}$) derart bemessen ist, dass die Temperatur der Baugruppe unterhalb einer kritischen Temperatur ($T_{krit}$) verbleibt, oberhalb derer eine Atmosphäre in einem explosionsgefährdeten Bereich gezündet werden kann.

5. Verfahren nach einem der Ansprüche 1 bis 4,
   **dadurch gekennzeichnet, dass**
   das Steuer-Signal ($s_c$) von der übergeordneten Einheit (5) erzeugt wird.

6. Sicherheitsschaltung (1) zur sicheren Begrenzung der Aufnahme elektrischer Leistung ($P_e$) an einer elektrischen Baugruppe (2) eines Feldgerätes (3), wobei die Baugruppe (2) die elektrische Leistung ($P_e$) über einen elektrischen Eingangs-Pfad (4) von einer übergeordneten Einheit (5) aufnimmt, umfassend:

   - zumindest einen am elektrischen Eingangs-Pfad (4) angeordneten Schalter (11) zum getakteten Trennen des Eingangs-Pfades (4) von der übergeordneten Einheit (5),
   - einen Signaleingang (12) für ein Steuer-Signal ($s_c$), und
   - einen Schaltkreis ($R_1$, $R_2$, $R_3$, $R_4$, 13, 14), der den Schalter (11) derart steuert, dass der Schalter (11)

      o den Eingangs-Pfad (4) in Abhängigkeit des Steuer-Signals ($s_c$) in einer vorbestimmten Taktung von der übergeordneten Einheit (5) trennt,
      o den elektrischen Eingangs-Pfad (4) sowohl bei fehlendem Steuer-Signal ($s_c$) als auch bei einem konstanten Gleichspannungsförmigen SteuerSignal ($s_c$) dauerhaft von der übergeordneten Einheit trennt, und
      o bei einem fehlerhaften Steuer-Signal ($s_c$) die elektrische Leistung ($P_e$) begrenzt, indem der Schalter (11) den Eingangs-Pfad (4) mindestens in einer vordefinierten Minimal-Ausschaltdauer ($t_{off,min}$) von der übergeordneten Einheit (5) trennt, wobei das Steuer-Signal ($s_c$) fehlerhaft ist, wenn es eine vordefinierte Maximal-Taktfrequenz ($f_{t,max}$) und/oder eine vordefinierte Maximal-Einschaltdauer ($t_{on,max}$) überschreitet,

wobei die übergeordnete Einheit (5) zur Erzeugung des Steuer-Signals ($s_c$) vorgesehen ist.

7. Sicherheitsschaltung (1) nach Anspruch 6, wobei der Schalter (11) und/oder der Signaleingang (12) als Transistoren/Transistor realisiert sind/ist.

8. Sicherheitsschaltung (1) nach Anspruch 7, wobei der Schaltkreis ($R_1$, $R_2$, $R_3$, $R_4$, 13, 14)

    - einen als Komparator geschalteten Verstärker (13) mit

        o zumindest einem ersten Eingang (131) für das Steuer-Signal ($s_c$), und
        o einem Ausgang (132), über den der Schalter (11) gesteuert wird, sowie

    - zumindest einen Kondensator (14)

umfasst, wobei der zumindest eine Kondensator (14) derart dimensioniert und zwischen dem Signaleingang (12) sowie dem ersten Eingang (131) verschaltet ist, dass die Minimal-Ausschaltdauer ($t_{off,min}$) zumindest von der Kapazität des zumindest einen Kondensators (14) abhängig ist.

**Claims**

1. Procedure to safely limit the consumption of electrical power ($P_e$) at an electrical module (2) of a field device (3), wherein the module (2) consumes the electrical power ($P_e$) from a higher-level unit (5) via an electrical input path (4), wherein

    - the consumption of electrical power ($P_e$) is controlled in that the input path (4) is separated from the higher-level unit (5) by a security circuit (1) at a predefined clock cycle, wherein the clock cycle is controlled by a control signal ($s_c$) at the security circuit (1),

    **characterized in that**

    - the electrical input path (4) is permanently separated from the higher-level unit (5) by the security circuit (1) both in the absence of a control signal ($s_c$) and in the presence of a constant control signal ($s_c$) in the form of a direct current, and
    - in the event of an incorrect control signal ($s_c$), the electrical power ($P_e$) is limited by the security circuit (1) **in that** the input path (4) is separated from the higher-level unit (5) by the security circuit (1) at least during a predefined minimum switch-off period ($t_{off,min}$), wherein the control signal ($s_c$) is incorrect if it exceeds a predefined maximum clock frequency ($f_{t,max}$) and/or a predefined maximum switch-on duration ($t_{on,max}$).

2. Procedure as claimed in Claim 1,
**characterized in that**
the control signal ($s_c$) is a square wave signal.

3. Procedure as claimed in Claim 1 or 2,
**characterized in that**
the control signal ($s_c$) is a periodic signal.

4. Procedure as claimed in Claim 1 to 3,
**characterized in that**
the minimum switch-off duration ($t_{off,min}$) is sized in such a way that the temperature of the assembly remains below a critical temperature ($T_{krit}$), above which an atmosphere can be ignited in a potentially explosive area.

5. Procedure as claimed in one of the Claims 1 to 4,
**characterized in that**
the control signal ($s_c$) is generated by the higher-level unit (5).

6. Security circuit (1)
designed to safely limit the consumption of electrical power ($P_e$) at an electrical module (2) of a field device (3), wherein the module (2) receives the electrical power ($P_e$) from a higher-level unit (5) via an electrical input path (4), said security circuit comprising:

    - at least one switch (11) arranged on the electrical input path (4) for the clocked separation of the input path (4) from the higher-level unit (5),
    - a signal input (12) for a control signal ($s_c$), and
    - a switch circuit ($R_1$, $R_2$, $R_3$, $R_4$, 13, 14) that controls the switch (11) in such a way that the switch (11)

        ∘ separates the input path (4) from the higher-level unit (5) depending on the control signal ($s_c$) at a predefined clock cycle,
        ∘ permanently separates the electrical input path (4) from the higher-level unit in the absence of a control signal ($s_c$) and in the event of a constant control signal ($s_c$) in the form of a DC voltage, and
        ∘ in the event of an incorrect control signal ($s_c$), limits the electrical power ($P_e$) in that the switch (11) separates the input path (4) from the higher-level unit (5) at least for a predefined minimum switch-off period ($t_{off,min}$), wherein the control signal ($s_c$) is wrong if it exceeds a predefined maximum clock frequency ($f_{t,max}$) and/or a predefined maximum switch-on duration ($t_{on,max}$), wherein the higher-level unit (5) is provided to generate the control signal ($s_c$).

7. Security circuit (1) as claimed in Claim 6, wherein the switch (11) and/or the signal input (12) is/are implemented as transistor(s).

8. Security circuit (1) as claimed in Claim 7, wherein the switch circuit ($R_1$, $R_2$, $R_3$, $R_4$, 13, 14) comprises

    - an amplifier (13) switched as a comparator with

      ◦ at least a first input (131) for the control signal ($s_c$), and
      ◦ an output (132) via which the switch (11) is controlled, as well as

    - at least a capacitor (14), wherein the at least one capacitor (14) is sized and switched between the signal input (12) and the first input (131) in such a way that the minimum switch-off duration ($t_{off,min}$) is at least dependent on the capacity of the at least one capacitor (14).

**Revendications**

1. Procédé destiné à une limitation sûre de la consommation de puissance électrique ($P_e$) sur un module électrique (2) d'un appareil de terrain (3), le module (2) consommant la puissance électrique ($P_e$) via un chemin d'entrée électrique (4) d'une unité supérieure (5), procédé pour lequel

    - la consommation de la puissance électrique ($P_e$) est commandée en ce que le chemin d'entrée (4) est séparé de l'unité supérieure (5) par un circuit de sécurité (1) à une cadence prédéfinie, la cadence étant commandée par un signal de commande ($s_c$) sur le circuit de sécurité (1),

    **caractérisé en ce que**

    - le chemin d'entrée électrique (4) est séparé en permanence de l'unité supérieure (5) par le circuit de sécurité (1) aussi bien en l'absence de signal de commande ($s_c$) qu'en présence d'un signal de commande ($s_c$) constant en forme de tension continue, et
    - en cas de signal de commande ($s_c$) erroné, la puissance électrique ($P_e$) est limitée par le circuit de sécurité (1) **en ce que** le chemin d'entrée (4) est séparé de l'unité supérieure (5) par le circuit de sécurité (1) au moins pendant une durée de coupure minimale ($t_{off,min}$) prédéfinie, le signal de commande ($s_c$) étant erroné lorsqu'il dépasse une fréquence d'horloge maximale ($f_{t,max}$) prédéfinie et/ou une durée d'enclenchement maximale ($t_{on,max}$) prédéfinie.

2. Procédé selon la revendication 1, **caractérisé en ce que** le signal de commande ($s_c$) est un signal rectangulaire.

3. Procédé selon la revendication 1 ou 2, **caractérisé en ce que** le signal de commande ($s_c$) est un signal périodique.

4. Procédé selon la revendication 1 à 3, **caractérisé en ce que** la durée minimale de coupure ($t_{off,min}$) est dimensionnée de telle sorte que la température du module reste inférieure à une température critique ($T_{krit}$), au-dessus de laquelle une atmosphère peut être enflammée dans une zone explosible.

5. Procédé selon l'une des revendications 1 à 4, **caractérisé en ce que** le signal de commande ($s_c$) est généré par l'unité supérieure (5).

6. Circuit de sécurité (1) destiné à la limitation sûre de la consommation de puissance électrique ($P_e$) sur un module électrique (2) d'un appareil de terrain (3), le module (2) consommant la puissance électrique ($P_e$) via un chemin d'entrée électrique (4) d'une unité supérieure (5), lequel circuit de sécurité comprend :

    - au moins un interrupteur (11) disposé sur le chemin d'entrée électrique (4) et destiné à la séparation cadencée du chemin d'entrée (4) de l'unité supérieure (5),
    - une entrée de signal (12) pour un signal de commande ($s_c$), et
    - un circuit de commutation ($R_1$, $R_2$, $R_3$, $R_4$, 13, 14) qui commande l'interrupteur (11) de telle sorte que l'interrupteur (11)

      ◦ sépare le chemin d'entrée (4) de l'unité supérieure (5) en fonction du signal de commande ($s_c$) selon une cadence prédéterminée,
      ◦ sépare durablement le chemin d'entrée électrique (4) de l'unité supérieure aussi bien en l'absence de signal de commande ($s_c$) qu'en présence d'un signal de commande ($s_c$) constant en forme de tension continue, et
      ◦ en cas de signal de commande ($s_c$) erroné, limite la puissance électrique ($P_e$) en ce que l'interrupteur (11) sépare le trajet d'entrée (4) de l'unité supérieure (5) au moins pendant une durée de coupure minimale ($t_{off,min}$) prédéfinie, le signal de commande ($s_c$) étant erroné lorsqu'il dépasse une fréquence d'horloge maximale ($f_{t,max}$) prédéfinie et/ou une durée d'enclenchement maximale ($t_{on,max}$) prédéfinie,

l'unité supérieure (5) étant prévue pour générer le signal de commande ($s_c$).

7. Circuit de sécurité (1) selon la revendication 6, pour lequel l'interrupteur (11) et/ou l'entrée de signal (12) est/sont réalisé(s) sous forme de transistor(s).

8. Circuit de sécurité (1) selon la revendication 7, pour lequel le circuit de commutation ($R_1$, $R_2$, $R_3$, $R_4$, 13, 14) comprend

   - un amplificateur (13) monté en comparateur avec

     ◦ au moins une première entrée (131) pour le signal de commande ($s_c$), et
     ◦ une sortie (132) par l'intermédiaire de laquelle l'interrupteur (11) est commandé, ainsi que

   - au moins un condensateur (14), l'au moins un condensateur (14) étant dimensionné et couplé entre l'entrée de signal (12) et la première entrée (131) de telle sorte que la durée de coupure minimale ($t_{off,min}$) dépend au moins de la capacité de l'au moins un condensateur (14).

**Fig. 1**

**Fig. 2**

$t_{on}$ @ 11

$s_c$

$f_t^{-1}$

1) $t_t \leq t_{on,max}$

**Fig. 3**

$t_{on,max}$ @ 11

$s_c$

$f_t^{-1}$

2) $t_t > t_{on,max}$

**Fig. 4**

$t_{off,min}$

$t_{on}$

$t_{off,min}$ @ 11

$t_t$

$s_c$

$f_t^{-1}$

3) $f_t > f_{t,max}$

**Fig. 5**

$t_{on,max}$

$t_{on}$ @ 11

$T_{krit}$

T @ 2

**Fig. 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013104139 A1
- WO 2012034796 A2
- DE 102010040833 A1